# FASCICULE DE BREVET EUROPEEN

(11) **EP 0 463 908 B1**
(45) Date de publication et mention de la délivrance du brevet: **24.07.1996**
(21) Numéro de dépôt: 91401539.1
(22) Date de dépôt: 11.06.1991
(51) Int. Cl.: G11B 5/49, G11B 15/12

(54) **Dispositif d'enregistrement magnétique à pluralité de têtes magnétiques**
Magnetaufzeichnungsvorrichtung mit einer Mehrzahl von Magnetköpfen
Magnetic recording device with a plurality of magnetic heads

(30) Priorité: 26.06.1990 FR 9008005
(43) Date de publication de la demande: 02.01.1992
(73) Titulaire: THOMSON-CSF, 75008 Paris (FR)
(72) Inventeur: Pirot, François-Xavier, F-92045 Paris la Défense (FR)
(74) Mandataire: Guérin, Michel

(56) Documents cités:
- GB-A- 1 249 225
- NL-A- 7 510 306
- US-A- 3 152 322
- US-A- 3 564 558
- US-A- 4 477 853
- PATENT ABSTRACTS OF JAPAN vol. 6, no. 241 (P-158)(1119) 30 novembre 1982, & JP-A- 57 138008 (HITACHI SEISAKUSHO K.K.) 26 août 1982,

## Description

L'invention concerne un dispositif magnétique d'enregistrement constitué par une pluralité de tête magnétique formant un réseau matriciel. L'invention permet de faciliter la mise en oeuvre de ces dispositifs tout en améliorant leurs caractéristiques.

Généralement, une tête magnétique est constituée d'un circuit magnétique à entrefer, associé à une inductance d'excitation. Le signal à enregistrer est appliqué à l'inductance sous la forme d'un courant. Le champ magnétique engendré dans le circuit magnétique permet d'enregistrer le signal sur une piste d'un support magnétique situé au voisinage de l'entrefer.

Dans le cas de l'enregistrement magnétique, il est courant d'utiliser simultanément plusieurs têtes magnétiques, réalisées par exemple par la technique des couches minces, afin d'enregistrer sur plusieurs pistes parallèles et, dans ce cas les têtes magnétiques élémentaires sont disposées de manière à constituer un réseau matriciel.

Un ensemble de têtes magnétiques élémentaires formant un réseau matriciel, est décrit dans une demande de brevet français n° 88 05592 publiée avec le n° 2 630 853 et qui doit être considérée comme faisant partie de la présente description.

Un tel ensemble de têtes magnétiques individuelles ou élémentaires formant une structure matricielle permet notamment, de diminuer le nombre de connexions nécessaires à faire fonctionner cet ensemble. Dans un tel ensemble en effet, chaque tête magnétique élémentaire est définie sensiblement au croisement d'un conducteur de colonne avec un conducteur de ligne, et les têtes magnétiques à exciter, c'est-à-dire celles qui sont sélectionnées, sont adressées par un adressage de type matriciel, de telle manière que le nombre de connexions nécessaires à une matrice N x P est égal seulement à N + P.

Ceci est rendu possible par l'existence d'un seuil, dû au support magnétique ou média. En effet, si une tête magnétique est commandée par un courant inférieur à un seuil donné, elle n'écrit pas (en première approximation) sur le média. Au-dessus du courant de seuil, générant un flux supérieur au champ coercitif du média, l'enregistrement est conservé.

Dans le cas des têtes magnétiques formant un réseau matriciel, pour chaque tête magnétique, un conducteur de ligne et un conducteur de colonne se croisent au sein d'un anneau qui constitue la tête magnétique individuelle : une fraction du courant de seuil est envoyée dans le conducteur de ligne et l'autre dans les conducteurs de colonnes. Par suite, les seules têtes magnétiques recevant globalement un courant générant un flux supérieur au seuil, sont celles qui sont situées à l'intersection du conducteur de ligne et des conducteurs de colonnes activées.

Un inconvénient de ce type de fonctionnement réside en ce qu'il impose de travailler avec un courant dont la valeur doit rester dans une plage étroite. En effet, un courant inférieur au seuil ne permet pas d'écrire, et à l'opposé choisir un courant trop au-dessus du seuil est également défavorable, car les fractions de courant dans la ligne et dans les colonnes doivent rester inférieures au seuil.

De plus, ces têtes élémentaires n'ont pas des performances identiques, de telle sorte que de faibles variations locales au cours de la fabrication engendrent une certaines variabilité des performances. Ceci exige notamment de répondre aux deux problèmes suivants :
- d'une part, à l'intérieur d'une matrice, cette variabilité des performances doit être maintenue dans une fenêtre suffisamment étroite pour que la tête magnétique élémentaire la plus efficace n'écrive pas quand on cherche à faire écrire la moins efficace ;
- d'autre part, la reproductibilité des performances moyennes d'un ensemble à l'autre, c'est-à-dire d'une matrice à l'autre, doit être suffisamment bonne pour permettre l'intégration des têtes magnétiques élémentaires à un dispositif d'enregistrement, sans exiger de réglages individuels de ces têtes, au moins dans les applications à large diffusion.

Une solution actuelle à ces deux problèmes consiste à imposer des contraintes et tolérances sévères, sur la conception et la fabrication de ces têtes magnétiques, d'où résulte notamment une élévation importante des coûts.

Une autre solution décrite dans le document GB-A-1 249 225 consiste à alimenter chacune des têtes magnétiques par l'intermédiaire de diodes.

La présente invention concerne un ensemble de têtes magnétiques élémentaires, formant un réseau matriciel, dont l'agencement nouveau consiste notamment à relier toutes les têtes magnétiques à un potentiel commun.

Selon l'invention, un dispositif d'enregistrement d'information sur pistes magnétiques comportant plusieurs têtes magnétiques (M1 à M9), des conducteurs en colonnes (X1 à X3) croisés avec des conducteurs en lignes (Y1 à Y3), les têtes magnétiques étant disposées sous la forme d'un réseau matriciel, chaque tête magnétique (M1 à M9) correspondant à une intersection d'un conducteur en colonne avec un conducteur en ligne, ledit dispositif comportant des moyens pour alimenter chacune des têtes magnétiques par l'intermédiaire d'un élément de commutation (I1 à I9), de manière à activer au moins une tête magnétique sélectionnée en commandant l'élément de commutation correspondant, et un état "conducteur" ou un état "bloqué" d'un élément de commutation (I1 à 19) étant commandé par l'un des deux conducteurs (X1 à X3, Y1 à Y3) de l'intersection correspondante et l'autre conducteur transportant le signal à enregistrer, caractérisé en ce que chaque tête magnétique (M1 à M9) est reliée par une de ses extrémités (2) à l'élément de commutation (I1 à I9), et par l'autre extrémité (3) à un potentiel commun à toutes les têtes magnétiques.

L'invention sera mieux comprise, et d'autres caractéristiques qu'elle comporte et avantages qu'elle présente apparaîtront à la lecture de la description de certain de ses modes de réalisation, cette description étant donnée en référence aux dessins ci-annexés parmi lesquels :
- la figure 1 est un schéma électrique d'un dispositif magnétique à plusieurs têtes magnétiques, suivant une première forme de réalisation de l'invention ;
- la figure 2 est une vue en perspective montrant partiellement le dispositif de l'invention selon le schéma de la figure 1;
- la figure 3 est une vue en coupe illustrant une méthode de fabrication du dispositif montré à la figure 1.

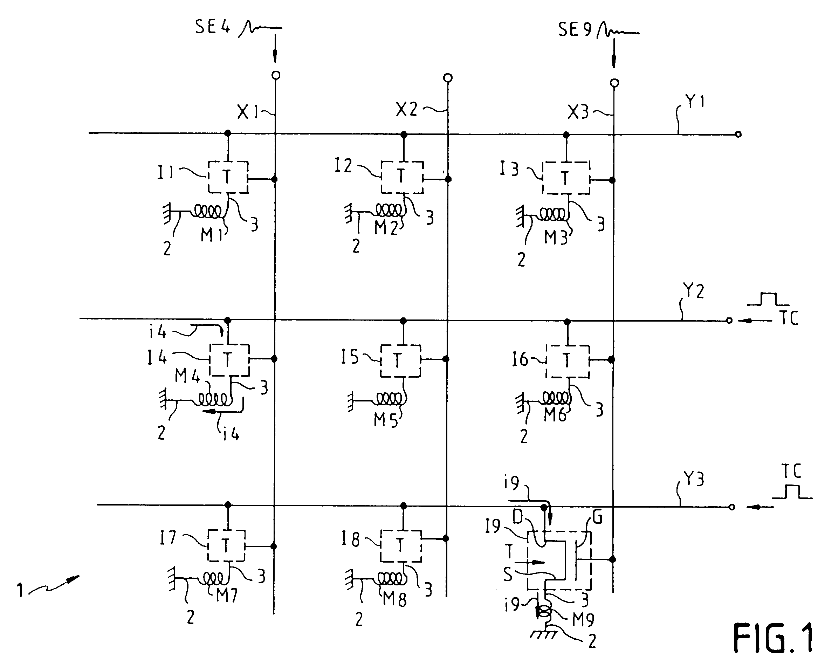

La figure 1 est un schéma électrique d'un dispositif magnétique d'enregistrement 1 conforme à l'invention.

Le dispositif magnétique 1 comporte une pluralité de têtes magnétiques M1, M2..., M9 représentées sous la forme d'inductances. Les têtes magnétiques M1 à M9 sont alimentées à l'aide de conducteurs disposés en ligne appelés conducteurs lignes Y1 à Y3, et à l'aide de conducteurs disposés en colonnes et appelés conducteurs colonnes X1 à X3.

Les conducteurs colonnes X1 à X3 sont croisées avec les conducteurs lignes Y1 à Y3, et en pratique chaque tête magnétique M1 à M9 est réalisée sensiblement à l'intersection d'un conducteur colonne avec un conducteur ligne.

Dans l'exemple non limitatif représenté à la figure 1 et pour simplifier la description, seulement trois conducteurs lignes Y1 à Y3 et trois conducteurs colonnes X1 à X3 sont représentés, formant 9 intersections où sont situés les têtes magnétiques M1 à M9, mais bien entendu le dispositif magnétique 1 peut comporter moins ou beaucoup plus de ces conducteurs croisés de sorte à comporter moins ou beaucoup plus de têtes magnétiques M1 à M9.

Dans l'art antérieur, l'adressage d'une tête magnétique sélectionnée est réalisé en alimentant cette tête magnétique simultanément à partir d'un conducteur ligne et d'un conducteur colonne, la somme des courants transportés par ces deux conducteurs devant être supérieure à un seuil donné, comme il a été expliqué dans le préambule, et comme décrit dans le document de brevet déjà cité.

Avec la présente invention, l'adressage d'une tête magnétique M1 à M9 sélectionnée, c'est-à-dire son alimentation, est accompli de manière différente. Suivant une caractéristique de l'invention, chaque tête magnétique M1 à M9 est associée à un élément de commutation I1 à I9 par l'intermédiaire duquel chaque tête magnétique est alimentée quand elle est sélectionnée.

Chaque élément de commutation remplit le rôle d'un interrupteur monté en série avec la tête magnétique, et qui laisse passer ou non le courant suffisant à produire le champ magnétique qui traduit un signal à écrire par la tête magnétique.

Dans cette configuration, les têtes magnétiques M1 à M9 sont alimentées par "tout ou "rien" suivant qu'elles sont sélectionnées ou non, de telle sorte que le courant d'alimentation peut être largement supérieur au seuil nécessaire, sans risquer de rencontrer les problèmes évoqués dans le préambule.

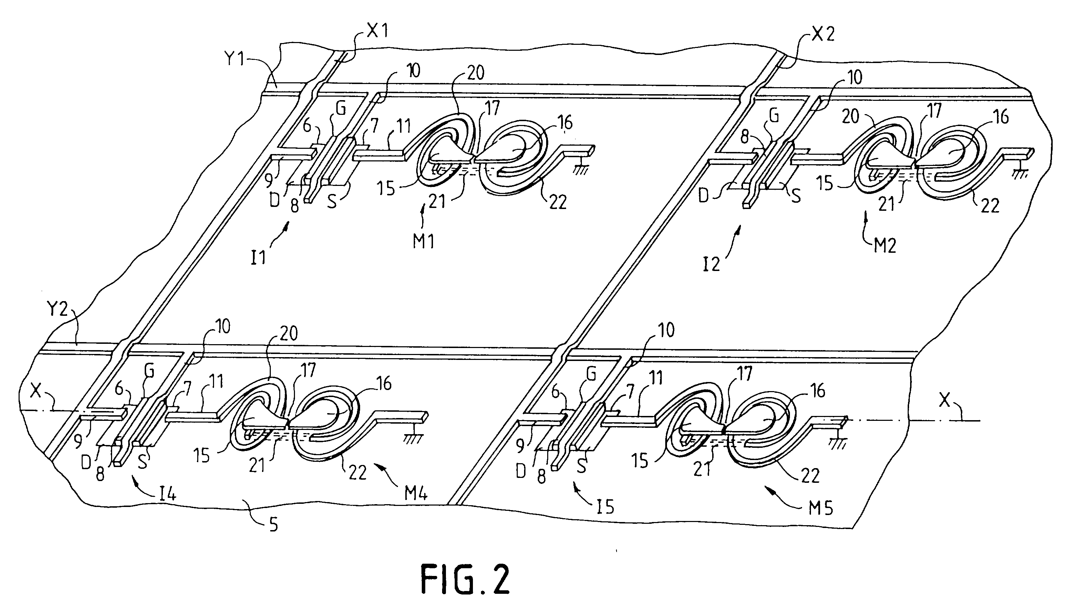

La fonction de commutation des éléments de commutation I1 à I9 peut être remplie par différents moyens, en eux-mêmes classiques, choisis en fonction notamment de caractéristiques propres au dispositif magnétique 1 : par exemple suivant ses caractéristiques de fonctionnement telles que vitesse, ou intensité du courant d'alimentation; ou encore en fonction du mode de réalisation du dispositif magnétique 1 ; par exemple, s'il est réalisé suivant une technologie de films en couches minces, comme décrit dans la demande de brevet 2 630 853 déjà citée ; l'élément de commutation peut être un transistor de type MOS, ou bipolaire ou même un dispositif à diode comme décrit par exemple plus loin en référence à la figure 2 ; mais l'élément de commutation pourrait tout aussi bien être constitué par un relais électromagnétique.

Dans l'exemple non limitatif de la première version de l'invention montrée à la figure 1, les éléments de commutation I1 à I9 sont des transistors T de type MOS, comme illustré particulièrement au niveau du neuvième élément de commutation I9 monté en série avec la neuvième tête magnétique M9.

Une extrémité 2 de l'inductance que constitue chaque tête magnétique M1 à M9, est portée à un potentiel de référence qui est la masse par exemple, c'est-à-dire par exemple le potentiel du substrat sur lequel peuvent être réalisées ces têtes magnétiques (comme il est davantage expliqué dans une suite de la description faite en référence à la figure 4).

L'autre extrémité ou seconde extrémité 3 de chaque tête magnétique M1 à M9 est reliée à l'élément de commutation I1 à I9 ; en fait dans le cas de la version montrée à la figure 1 où chaque élément de commutation I1 à I9 est un transistor T de type MOS, la seconde extrémité 3 est reliée à la source S du transistor T ; le drain D et la grille G de commande de ce dernier étant reliés respectivement au conducteur ligne Y1 à Y3 correspondant et au conducteur colonne X1 à X3 correspondant.

Ainsi, dans le cas du neuvième élément de commutation I9, le drain D est relié au troisième conducteur ligne Y3, et la grille G est reliée au troisième conducteur colonne X3.

Dans cette configuration, l'adressage d'une tête magnétique donnée s'effectue en commandant par le conducteur colonne correspondant, la mise à l'état passant de tous les transistors T reliés à ce conducteur colonne, pendant que simultanément on applique au conducteur ligne correspondant la tension nécessaire à engendrer le courant d'écriture dans la tête magnétique sélectionnée.

Ainsi par exemple si l'on désire écrire, c'est-à-dire enregistrer sur un support magnétique par les quatrième et neuvième têtes magnétiques M4 et M9, on applique aux second et troisième conducteurs lignes Y2, Y3 (et uniquement sur ces deux conducteurs) une tension qui par rapport au potentiel de la masse est l'image du signal S4, S9 à écrire, et simultanément on applique aux premier et troisième conducteurs colonnes X1 et X3 (et uniquement sur ces 2 conducteurs) une tension de commande TC qui par rapport à la masse fait "conduire" les transistors qui forment les éléments de commutation I4 et I9 ; ceci engendre des courants d'écriture i4 et i9 qui traversent respectivement les quatrième et neuvième têtes magnétiques M4, M9 et uniquement ces dernières.

Comme il apparait sur la figure au niveau de la neuvième tête magnétique M9, la tension de commande TC appliquée aux conducteurs lignes Y2, Y3 est en fait appliquée à la grille de commande G de chaque transistor T relié à ces conducteurs lignes, rendant ce transistor conducteur et apte à laisser passer un courant i4, i9 qui se referme par la tête M4, M9, si le drain D de ce transistor est relié à un conducteur colonne X1 à X3 auquel est appliqué au même moment un signal d'écriture tel que S4, S9 ; le sens de passage du courant L pouvant être aussi à l'inverse du sens représenté à la figure 1.

Il est à noter que les tensions de commande TC et les signaux d'écriture S4, S9 sont délivrés par des moyens (non représentés) en eux-mêmes classiques, comprenant par exemple de manière traditionnelle des générateurs de signaux et de tension coopérant avec un système de "portes" et de registres à décalage.

Il est à noter en outre que les noms de "ligne" et "colonne" sont donnés aux conducteurs pour mieux les différencier selon des critères habituels, et ne préjugent pas de la position verticale ou horizontale ou intermédiaire qui peut leur être conférée.

La figure 2 est une vue en perspective qui montre, à titre d'exemple non limitatif, une disposition des têtes magnétiques, des éléments de commutation et des conducteurs lignes et colonnes dans le cas d'une réalisation où tous ces éléments sont réalisés sur un même substrat, suivant un montage semblable à celui de la figure 1.

Pour simplifier la figure 2, seulement 4 têtes magnétiques sont représentées par exemple les 1ère, 2ème, 4ème et 5ème têtes magnétiques M1, M2, M4 et M5 situées aux intersections des premier et second conducteurs lignes Y1, Y2 avec les premier et second conducteurs colonnes X1, X2.

Les têtes magnétiques M1, M2, M4, M5 sont reliées aux conducteurs colonnes X1, X2 correspondant par l'intermédiaire chacun d'un élément de commutation I1, I2, I4, I5. Tous ces éléments sont réalisés sur un même substrat 5, en silicium monocristallin par exemple, par des procédés en eux-mêmes classiques.

Chaque élément de commutation I1, I2, I4, I5 est constitué par un transistor du type "MOS" pour lequel une première et une seconde diffusions 6, 7 réalisées dans le substrat 5 servent respectivement à constituer le drain D et la source S ; la grille de commande G est réalisée de façon traditionnelle par un dépôt métallique 8 formé sur l'espace séparant les deux diffusions 6, 7. Chaque drain D ou première diffusion 6 est relié au conducteur colonne X1, X2 correspondant par une connexion de colonne 9 ; chaque grille G est reliée au conducteur ligne Y1, Y2 correspondant par une connexion 10 ; et chaque source S ou seconde diffusion est reliée à la tête magnétique M1, M2, M4, M5 correspondante à l'aide d'une connexion de source 11 dont une extrémité est en contact avec la seconde diffusion.

Les têtes magnétiques M1, M2, etc. sont constituées de manière classique par :
- une pièce polaire supérieure en un matériau magnétique formée par les deux pôles magnétiques 15,16 séparés par un entrefer 17 ;
- une pièce polaire inférieure en un matériau magnétique (non visible sur la figure 2) servant à refermer le circuit magnétique ;
- un ou plusieurs conducteurs qui passent dans le circuit magnétique dans lequel ils produisent un champ magnétique quand ils sont parcourus par un courant.

Dans l'exemple non limitatif décrit, la connexion de source 11 est reliée à un conducteur d'excitation 20 ayant une forme de spirale, de manière à s'enrouler autour du circuit magnétique et à passer plusieurs fois dans ce dernier. Dans l'exemple non limitatif décrit, le conducteur d'excitation 20 traverse deux fois le circuit magnétique du côté du premier pôle 15 comme représenté sur la figure 2 ; puis le conducteur d'excitation 20 est ensuite repris par une connexion intérieure 21 (montrée en traits pointillés), de manière à revenir en surface du substrat 5 du côté du second pôle magnétique 16 où il est repéré selon un second conducteur 22. Ce second conducteur 22 tourne sur lui-même et forme à son tour une spirale qui traverse le circuit magnétique. Le courant circulant dans les conducteurs d'excitation 21, 22 se referme ensuite par le substrat 5 par exemple, et à cet effet une connexion de masse est symbolisée sur la figure 2 à une extrémité de tous les conducteurs 22.

Dans l'exemple non limitatif décrit le champ magnétique d'écriture installé dans le circuit magnétique, est produit par trois passages de conducteur d'excitation au travers du circuit magnétique, mais bien entendu, dans le cadre de l'invention moins ou plus de ces passages peuvent être réalisés.

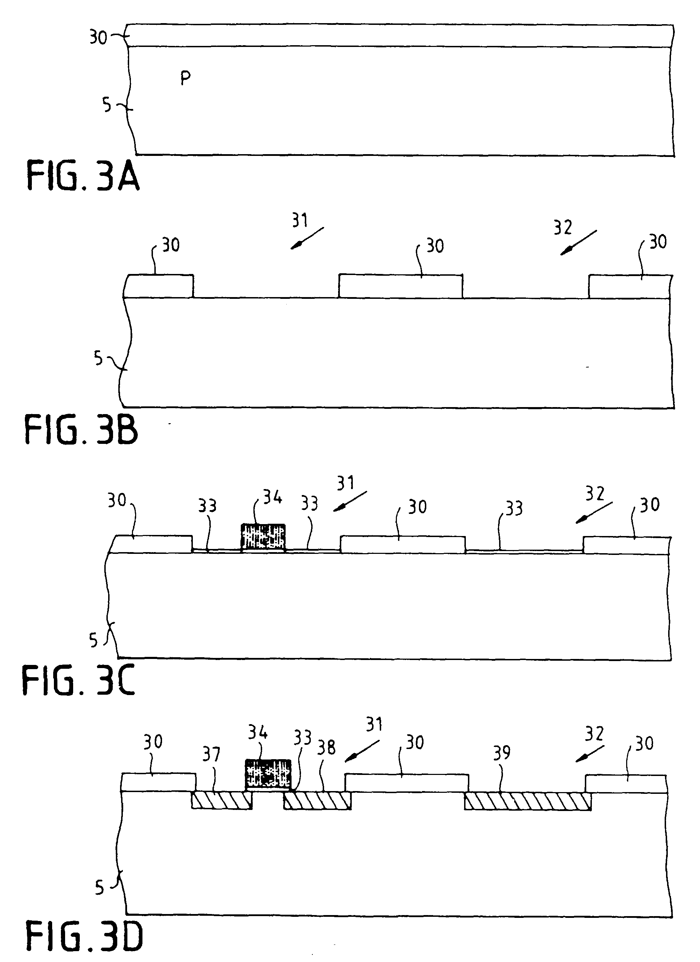

Les figures 3A à 3H illustrent à titre d'exemple non limitatif, certaines étapes importantes d'un procédé permettant de réaliser la structure montrée à la figure 2. Les figures 3A à 3H sont des vues en coupe de cette structure suivant un axe X-X montré à la figure 2.

Suivant la méthode proposée ci-après, les transistors MOS sont réalisés à l'aide d'un procédé d'épitaxie classique, et à l'aide de techniques de photolithogravure traditionnelles à l'aide desquelles sont aussi réalisées les têtes magnétiques.

La figure 3A représente le substrat 5 recouvert d'une couche 30 électriquement isolante ; dans l'exemple non limitatif, décrit le substrat 5 est en silicium monocristallin dopé de type P par exemple, et la couche isolante 30 est un oxyde de silicium (siO₂).

La figure 3B montre que la couche isolante 30 est ensuite gravée jusqu'au substrat 5 à des emplacements 31,32 qui sont prévus respectivement pour le transistor MOS et pour la tête magnétique.

La figure 3C représente une étape suivante survenant après la réalisation d'une couche isolante très mince 33, d'oxyde par exemple, sur les emplacements 31,32, et ceci après dépôt d'une couche 34 de silicium polycristallin dans une partie centrale de l'emplacement 31, sur la couche mince d'oxyde 33 ; cette couche 34 de silicium polycristallin étant destinée à former la grille G du transistor.

La figure 3D montre qu'ensuite, les parties non protégées de la couche mince 33 d'oxyde ont été éliminées et que des zones 37,38,39 dopées N (par exemple du phosphore) ont été réalisées par diffusion dans le substrat 5 ; d'une part à l'emplacement 31 où la première zone 37 doit constituer le drain D, et où la seconde zone 38 doit constituer la source S ; et d'autre part à l'emplacement 32 de la tête magnétique.

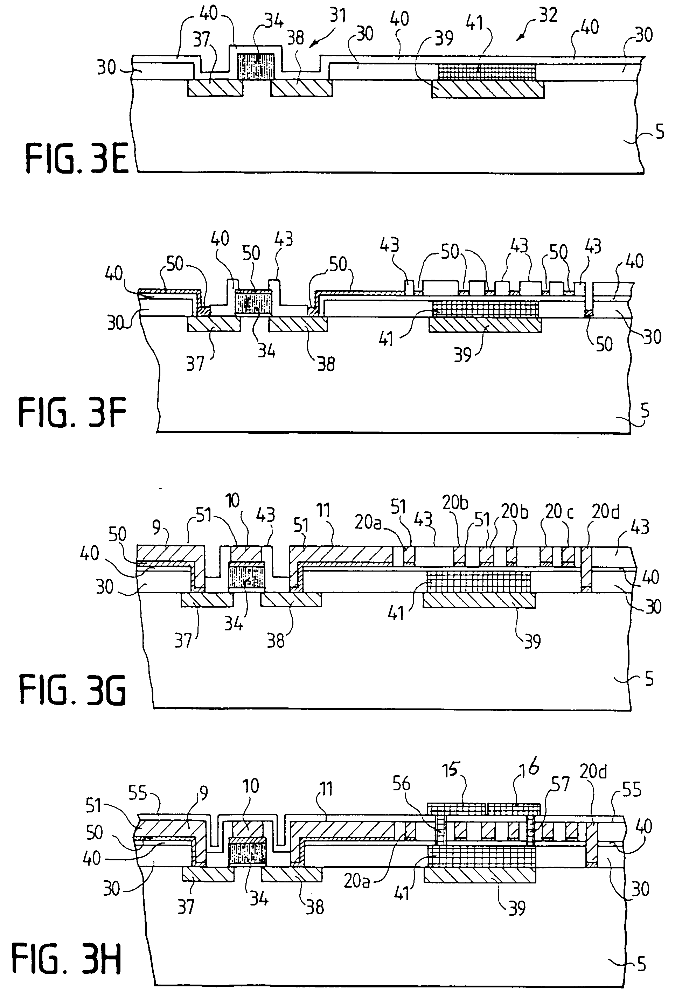

La figure 3E représente le dépôt d'une couche 41 d'un matériau magnétique, par exemple du FeNi (permalloy) à l'emplacement 32 de la tête magnétique. Cette couche 41 constitue une pièce polaire inférieur du circuit magnétique de la tête magnétique, et elle peut être réalisée par une méthode classique d'électrolyse. Le dépôt de la couche magnétique 41 a été effectué après dépôt d'une troisième couche d'oxyde 40 sur l'ensemble puis après élimination de cette couche 40 à l'emplacement 32 de la tête magnétique.

Dans une étape suivante illustrée à la figure 3F, après avoir recouvert l'ensemble d'une quatrième couche d'oxyde 43, puis après avoir gravé les couches d'oxyde 40,43 à des emplacements prévus pour réaliser des conducteurs, on réalise le dépôt d'une fine couche métalliques de cuivre 50 par exemple, à l'aide d'un procédé d'électrolyse.

La figure 3G montre que la couche 50 de cuivre est ensuite recouverte, là où des conducteurs sont prévus, par une seconde couche de cuivre 51 beaucoup plus épaisse, réalisée par exemple par électrolyse.

On a ainsi obtenu grâce à la seconde couche de cuivre 50, successivement en allant de la gauche de la figure 3G vers la droite :
- un conducteur 9 qui constitue le conducteur de colonne 9 montré en figure 2 ; ce conducteur étant en contact avec le drain D que forme la zone 37 ;
- un conducteur 10 qui constitue la connexion de grille 10 montrée à la figure 2 ; ce conducteur étant en contact avec la couche 34 qui forme la grille G ;
- un conducteur 11 qui constitue un conducteur de source 11 montré à la figure 2 ; ce conducteur étant en contact avec la source S que forme la seconde zone 38 ;
- un conducteur qui constitue le conducteur d'excitation 20 en spirale montré à la figure 2 ; comme montré à la figure 2, ce conducteur traverse trois fois le circuit magnétique : aussi il est représenté à la figure 3H selon sa section, successivement avec le repère 20a pour sa partie située en dehors du circuit magnétique ; puis trois fois avec le repère 20b pour sa partie qui traverse le circuit magnétique ; puis deux fois à nouveau avec le repère 20C pour sa partie extérieure au circuit magnétique ; et enfin avec le repère 20d pour sa partie reliée au substrat 5, et qui est symbolisée comme étant la masse sur la figure 2.

La figure 3H illustre l'une des dernières étapes, étape qui consiste à réaliser la pièce polaire supérieure, c'est-à-dire les deux pôles magnétiques 15,16 séparées par un entrefer 17. A cet effet on effectue les opérations suivantes :
- on recouvre l'ensemble d'une quatrième couche isolante 55 ;
- on grave la quatrième couche 55 jusqu'à la couche magnétique 41 (pièce polaire inférieure) en deux points 56,57 situés vers les extrémités de cette couche magnétique ;
- et enfin, par un procédé d'électrolyse, on réalise les deux pôles magnétiques 15,16 (en FeNi) qui sont alors reliés à la couche magnétique 41 par les points 56,57.

La méthode de réalisation ci-dessus décrite est donnée à titre d'exemple non limitatif. Il est possible notamment de réaliser les éléments de commutation I1 à I9 aussi bien par des transistors du type "enrichi" que du type "déplété". On peut également réaliser les transistors et les têtes magnétiques par la technique des couches minces.

## Revendications

1. Dispositif d'enregistrement d'information sur pistes magnétiques comportant plusieurs têtes magnétiques (M1 à M9), des conducteurs en colonnes (X1 à X3) croisés avec des conducteurs en lignes (Y1 à Y3), les têtes magnétiques étant disposées sous la forme d'un réseau matriciel, chaque tête magnétique (M1 à M9) correspondant à une intersection d'un conducteur en colonne avec un conducteur en ligne, ledit dispositif comportant des moyens pour alimenter chacune des têtes magnétiques par l'intermédiaire d'un élément de commutation (I1 à I9), de manière à activer au moins une tête magnétique sélectionnée en commandant l'élément de commutation correspondant, et un état "conducteur" ou un état "bloqué" d'un élément de commutation (I1 à I9) étant commandé par l'un des deux conducteurs (X1 à X3, Y1 à Y3) de l'intersection correspondante et l'autre conducteur transportant le signal à enregistrer, caractérisé en ce que chaque tête magnétique (M1 à M9) est reliée par une de ses extrémités (2) à l'élément de commutation (I1 à I9), et par l'autre extrémité (3) à un potentiel commun à toutes les têtes magnétiques.

2. Dispositif d'enregistrement selon la revendication 1, caractérisé en ce que l'élément de commutation (I1 à 19) est un transistor.

3. Dispositif d'enregistrement selon l'une des revendications précédentes, caractérisé en ce que l'élément de commutation (I1 à I9) est un transistor du type "MOS".

4. Dispositif d'enregistrement selon la revendication 2, caractérisé en ce que le transistor est du type bipolaire.

## Patentansprüche

1. Vorrichtung zur Aufzeichnung von Informationen auf Magnetspuren, mit mehreren Magnetköpfen (M1 bis M9), mit Spaltenleitern (X1 bis X3), die sich mit Zeilenleitern (Y1 bis Y3) kreuzen, wobei die Magnetköpfe in Matrixform angeordnet sind und jeder Magnetkopf (M1 bis M9) einem Schnittpunkt eines Spaltenleiters und eines Zeilenleiters entspricht, mit Mitteln zur Speisung jedes Magnetkopfs über ein Schaltelement (I1 bis I9), so daß mindestens ein ausgewählter Magnetkopf aktiviert wird, indem das entsprechende Schaltelement angesteuert wird, wobei ein leitender oder ein gesperrter Zustand eines Schaltelements (I1 bis I9) durch einen der beiden Leiter (X1 bis X3, Y1 bis Y3) des entsprechenden Schnittpunkts gesteuert wird, während der andere Leiter das aufzuzeichnende Signal transportiert, dadurch gekennzeichnet, daß jeder Magnetkopf (M1 bis M9) mit einem seiner Enden (2) an das Schaltelement (I1 bis I9) und mit dem anderen Ende (3) an ein allen Magnetköpfen gemeinsames Potential angeschlossen ist.

2. Aufzeichnungsvorrichtung nach Anspruch 1, dadurch gekennzeichnet, daß das Schaltelement (I1 bis I9) ein Transistor ist.

3. Aufzeichnungsvorrichtung nach einem der vorhergehenden Ansprüche, dadurch gekennzeichnet, daß das Schaltelement (I1 bis I9) ein MOS-Transistor ist.

4. Aufzeichnungsvorrichtung nach Anspruch 2, dadurch gekennzeichnet, daß der Transistor ein bipolarer Transistor ist.

## Claims

1. Device for recording information on magnetic tracks including several magnetic heads (M1 to M9), column conductors (X1 to X3) intersecting with row conductors (Y1 to Y3), the magnetic heads being arranged in the form of a matrix network, each magnetic head (M1 to M9) corresponding to an intersection of a column conductor with a row conductor, the said device including means for feeding each of the magnetic heads via a switching element (I1 to I9), so as to activate at least one selected magnetic head by controlling the corresponding switching element, and an "on" state or an "off" state of a switching element (I1 to I9) being controlled be one of the two conductors (X1 to X3, Y1 to Y3) of the corresponding intersection and the other conductor transporting the signal to be recorded, characterized in that each magnetic head (M1 to M9) is linked by one of its ends (2) to the switching element (I1 to I9), and by the other end (3) to a potential common to all the magnetic heads.

2. Recording device according to Claim 1, characterized in that the switching element (I1 to I9) is a transistor.

3. Recording device according to one of the preceding claims, characterized in that the switching element (I1 to I9) is a transistor of the "MOS" type.

4. Recording device according to Claim 2, characterized in that the transistor is of the bipolar type.
